(19) Europäisches Patentamt
European Patent Office
Office européen des brevets

(11) **EP 2 986 001 A1**

(12) **EUROPEAN PATENT APPLICATION**

(43) Date of publication:
**17.02.2016 Bulletin 2016/07**

(51) Int Cl.:
**H04N 19/52** (2014.01)   **H04N 19/463** (2014.01)
**H04N 19/33** (2014.01)   **H04N 19/59** (2014.01)

(21) Application number: **14306278.4**

(22) Date of filing: **14.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Rondao Alface, Patrice**
  **2018 Antwerpen (BE)**

• **Stevens, Christophe**
  **2018 Antwerpen (BE)**
• **Macq, Jean-François**
  **2018 Antwerpen (BE)**

(74) Representative: **D'Halleweyn, Nele Veerle Trees Gertrudis**
**Arnold & Siedsma**
**Bezuidenhoutseweg 57**
**2594 AC The Hague (NL)**

(54) **Network-friendly scalable video coding**

(57)     A method for at least one of encoding a video signal as a scalable video signal and transcoding a video signal to a scalable video signal having at least two layers representing different versions, said at least two layers comprising a base layer and at least one enhancement layer, said method comprising: detecting whether a frame of said video signal is to be encoded predictively; and when it is detected that said frame is to be encoded predictively, performing: determining at least one sharable information parameter relating to said frame based on at least a first version of said video signal; and providing said at least one sharable information parameter for at least one other version of said video signal; and/or encoding said frame as a number of predictive frames for a corresponding number of said at least two layers using intra-layer prediction without using interlayer prediction.

FIG. 7

**Description**

Field of the Invention

The field of the invention relates to video coding. Particular embodiments relate to a method for at least one of encoding and transcoding, a method for at least one of decoding and transcoding, an encoder-transcoder, a decoder-transcoder and a computer program product for at least one of encoding-transcoding and decoding-transcoding.

Background

Scalable Video Coding is considered an important tool for ensuring low-latency adaptivity in the network with reduced bandwidth needs. Indeed, when streaming video content under varying channel conditions (such as e.g. bandwidth or packet loss rate), it is useful to adapt the video quality that is sent to end-users in order to maximize the received video quality. This adaptation consists in *e.g.* sending a lower-resolution video or a lower rate at the same resolution in order to decrease the needs of bandwidth and buffer sizes when the quality of the connection drops as well as sending a larger-resolution (and therefore higher-quality) video when the channel conditions improve again, preferably without too many frequent variations in quality. One known example of such adaptation mechanisms is HTTP Adaptive Streaming (HAS or DASH, Dynamic Adaptive Streaming over HTTP). The easiest way to stream different qualities consists in simulcasting (or storing) in the network multiple different resolutions and rates of the same content. What Scalable Video Coding introduces in this context is the possibility to exploit the redundancy between these resolutions by encoding them together as substreams in one layered video signal. The main advantages are: compression performance over simulcast and lower-latency adaptation (since all resolutions are directly available as substreams without the need and cost of splicing to another stream).

While Scalable Video Coding is known (Fine-Grained Scalability was already introduced in the past for MPEG-2), and while its advantages over simulcasting for network conditions adaptivity have already been widely demonstrated for H.264/SVC (Scalable Video Coding) in the scientific literature, scalable codecs have received very little adoption by industry. Only a few niche markets actually make use of scalable video codecs.

The H.265/HEVC (High Efficiency Video Coding) video compression standard shows an improvement of 50% in compression performance with respect to H.264/AVC but at the cost of a much larger computational complexity. Its scalable extension H.265/SHVC (Scalable HEVC) also suffers from several potential drawbacks hindering widespread adoption.

Summary

Deployment of SHVC in the network would be facilitated by the ability to convert any of its layers into HEVC video signals in real-time with minimal delay. This conversion of an arbitrary layer of SHVC towards an HEVC video signal requires actual transcoding (with - at least partial-reconstruction of image intensity data), and not a simple bitstream rewriting (without any reconstruction of image intensity data), with a larger complexity than in the SVC to AVC conversion case.

More precisely, considering SHVC, the fact that the decoding is performed in multiple loops may add an undesirable delay for transcoding with respect to a single-loop strategy as in SVC. Since HEVC is more complex than AVC and SHVC is also more complex than SVC, it is to be expected that SHVC to HEVC transcoding can be hard to achieve for 1080p60 , 8bit or 4K without expensive hardware solutions and resources. Consequently, a standard-compliant approach cannot be processed in real-time and with low-delay, both of which are necessary for a successful deployment of SHVC in the network.

A problem to be solved is therefore the following: how can the computational complexity be simplified of converting or transcoding an SHVC layer (a substream of the scalable video signal) into an HEVC video signal, in order to benefit from scalability in the network while streaming to end-user devices that do not support SHVC decoding? A more general problem to be solved is the following: how can the computational complexity be simplified of converting or transcoding between a scalable video signal having multiple layers and a single-layer video signal?

It is an object of embodiments of the present invention to simplify the computational complexity of transcoding between a scalable video signal (such as an SHVC layer) and a video signal (such as an HEVC video signal). Another object of embodiments of the present invention is to reduce the required bitrate for transmitting scalable video signals. Yet another object of embodiments of the present invention is to reduce the time taken for transcoding between a scalable video signal and a video signal. A further object of embodiments of the invention is to enhance the adaptivity when streaming a scalable video signal adaptively.

Although the present specification discusses video signals with a particular focus on H.265/HEVC and scalable video signals with a particular focus on H.265/SHVC and SHVC_BL, the herein proposed variant of SHVC, it will be appreciated by the skilled person that aspects, embodiments, features, principles, insights and advantages of the present specification also apply for other video signals and/or other scalable video signals, even when these are yet unknown, if these share at least some of the features and/or properties of said specific codecs. When confronted with video signals and/or scalable video signals that may not necessarily use the H.265 codec, the skilled person will nevertheless be able to apply the insights presented in the present specification thereto.

According to a first aspect of the invention, there is provided a method for at least one of encoding a video signal as a scalable video signal and transcoding a video signal to a scalable video signal, said scalable video signal having at least two layers representing different versions of said video signal, said at least two layers comprising a base layer and at least one enhancement layer. Said method comprises: detecting whether a frame of said video signal is to be encoded predictively; and when it is detected that said frame is to be encoded predictively, performing at least one of the following sets of steps: determining at least one sharable information parameter relating to said frame based on at least a first version of said video signal and providing said determined at least one sharable information parameter for at least one other version of said video signal; and encoding said frame as a number of predictive frames for a corresponding number of said at least two layers using intra-layer prediction without using inter-layer prediction.

In other words, performing encoding without using inter-layer prediction for at least some frames, depending on which type of frame is detected, makes it possible to reduce the amount of predictions between layers. This is only possible when the encoding process is controlled. By using inter-layer prediction for key frames (i.e., intra frames) only, transcoding of any layer to a new video signal is simplified, since only the key frames of that layer have to be re-encoded. The predictive frames, that have been encoded without using inter-layer prediction, can be recuperated (i.e., repurposed anew as is) for the new video signal.

Further, by providing at least one sharable information parameter for at least one other version than the first version based upon which the at least one sharable information parameter has been determined, it is possible to exploit redundancy between layers, since to at least some extent the one or more sharable information parameters that may thus be determined are applicable to (i.e., can be provided for) not only said first version, but also said at least one other version. Optionally, said at least one sharable information parameter may be provided for multiple layers of said scalable video signal, so as to be shared by them. This exploits redundancy between layers to improve the data bitrate of the scalable video signal. When a sharable information parameter is shared across multiple layers that include one or more spatial enhancement layers and the base layer, the sharable information parameter is thus provided for layers of different spatial resolution, and may, if necessary, require scaling (downscaling or upscaling) when decoding or transcoding the scalable video signal.

In this manner, the method allows to simplify the computational complexity of transcoding between a scalable video signal and a video signal, since at least some frames can be recuperated. Also, the method allows to reduce the bitrate that is required for transmitting the scalable video signal, since sharing at least one sharable information parameter allows to exploit redundancy when encoding.

In an embodiment, the method comprises the following step: when it is detected that said frame of said video signal is to be encoded as a predictive frame, determining at least one sharable information parameter relating to said frame based on at least a first version of said video signal; and providing said determined at least one sharable information parameter for at least one other version of said video signal; wherein said at least one sharable information parameter comprises at least one set of motion vectors. The method further comprises the following step: when it is detected that said frame is to be encoded predictively, encoding said frame as a number of predictive frames for a corresponding number of said at least two layers using intra-layer prediction without using inter-layer prediction.

Motion vectors account for a large part (up to 30% of an HEVC video signal) of the size of a scalable video signal, or any type of video signal, and thus influence its bitrate for transmission. By providing as said at least one sharable information parameter at least one set of motion vectors, it is possible to reduce the required size of a scalable video signal.

In a further developed embodiment, which may optionally be combined with the previous embodiments, said at least one sharable information parameter comprises at least one of any one of the following: a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

Given that H.265/HEVC and SHVC provide many more possibilities for having adaptive prediction (Prediction Unit, PU) or transform block sizes (Transform Unit, TU) when compared to H.264/AVC, scaling this information from a layer to another layer significantly reduces encoding complexity as well as the cost in bandwidth related to the signaling of such prediction and transform units. It is also easier to perform, at an encoding stage, rate-control for a given layer when the number of partitions of PUs and TUs are known in advance. Therefore, knowledge from the encoding of a given layer can be re-used for the encoding of another layer, without the complexity of a multiple pass encoding for each layer.

In an embodiment, which may be combined with the previous embodiments, said first version of said video signal is a spatial enhancement layer of said at least one enhancement layer.

In this manner, it is possible to determine the at least one sharable information parameter with greater accuracy, since a spatial enhancement layer typically has a higher information value than other, lower-resolution layers, such as the base layer. Preferably, the highest-resolution spatial enhancement layer is used, since using this version allows to determine the at least one sharable information parameter with even greater accuracy than for other versions. Further, the skilled person will appreciate that determining said at least one sharable information parameter based on at least a spatial enhancement layer may require, if there are multiple, determining which spatial enhancement layer to choose therefrom.

According to a second aspect of the invention, there is provided a method for at least one of decoding a scalable video signal and transcoding a scalable video signal to a video signal, said scalable video signal having at least two layers representing different versions of said video signal, said at least two layers comprising a base layer and at least one enhancement layer. Said method comprises: detecting for each frame of a number of frames of at least one of said at least two layers whether said frame is a predictive frame; and when it is detected that said frame is a predictive frame, performing at least one of the following sets of steps: reconstructing said predictive frame using intra-layer prediction without using inter-layer prediction; and detecting whether said predictive frame contains at least one sharable information parameter, SIP, for reconstructing said predictive frame. When it is detected that said predictive frame contains no SIP, the method comprises: obtaining at least one SIP from at least one corresponding predictive frame of another layer of said at least two layers.

In this manner, it is possible to, depending on which type of frame is detected, control the decoding and/or transcoding process such that the computational complexity is reduced, since for at least some frames, it is unnecessary to first decode multiple dependencies.

Further, the method allows to efficiently use one or more sharable information parameters included in the scalable video signal, by using the one or those contained in the predictive frame if possible, or else obtaining one or more from another layer. By exploiting the redundancy between layers, this improves the size requirement for the scalable video signal.

In an embodiment, the method comprises, after obtaining said at least one SIP, the step of detecting whether the scale of said predictive frame and the scale of said obtained at least one SIP correspond; and when it is detected that the scales do not correspond: scaling said obtained at least one SIP accordingly.

Since it may be so that the at least one sharable parameter, where applicable depending on the type of the parameter(s), needs to be scaled, the above described embodiment allows to detect this and act accordingly, to allow the scaled at least one sharable information parameter to accord with that of the predictive frame to be decoded and/or transcoded.

In addition to detecting scale correspondence and scaling accordingly, said obtained at least one SIP may be subjected to any one or more of the following operations: adding at least one offset, interpolating between or otherwise combining at least two of said obtained at least one SIP. For example, if frames of a given layer correspond to a sub-part or a shifted part of another layer (for example, but not limited to, a region of interest of the video signal), at least one offset may be added to said at least one SIP accordingly. Also, if the frames rates differ, it may be that a plurality of predictive frames of one layer corresponds to a single predictive frame or to a less-numbering plurality of predictive frames of another layer, such that there may be performed an interpolation of a plurality of SIPs obtained from said corresponding plurality of predictive frames, since a predictive frame of a first layer may correspond to at least two predictive frames of another layer. Also, if multiple predictive frames of a first layer correspond with a single predictive frame or a less-numbering plurality of predictive frames of a second layer, said at least one SIP may be obtained from said single predictive frame or said less-numbering plurality of predictive frames, for each of said multiple predictive frames of said first layer.

The skilled person will understand that the hereinabove described considerations and advantages also apply, *mutatis mutandis.*

In an embodiment, which may be combined with the previous embodiments, said at least one sharable information parameter comprises at least one set of motion vectors.

In a further developed embodiment, which may optionally be combined with the previous embodiments, said at least one sharable information parameter comprises at least one of any one of the following: a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

In an embodiment, which may be combined with the previous embodiments, for transcoding a layer of said at least two layers of said scalable video signal to a video signal, the method comprises: when it is detected that a frame of said layer is a key frame, re-encoding said key frame as a key frame for said video signal using intra-layer prediction without using inter-layer prediction; and when it is detected that a frame of said layer is a predictive frame, recuperating said predictive frame as a predictive frame for said video signal without re-encoding said predictive frame.

According to an alternative aspect to the second aspect of the invention, there is provided a method for at least one of decoding a scalable video signal and transcoding a scalable video signal to a video signal, said scalable video signal having at least two layers representing different versions of said video signal, said at least two layers comprising a base layer and at least one enhancement layer. Said method comprises: detecting for each frame of a number of frames of at least one of said at least two layers whether said frame is a predictive frame; and when it is detected that said frame is a predictive frame, performing at least one of the following sets of steps: reconstructing said predictive frame using intra-layer prediction without using inter-layer prediction; and detecting whether said predictive frame contains at least one sharable information parameter, SIP, for reconstructing said predictive frame. When it is detected that said predictive frame contains no SIP, the method comprises: obtaining at least one SIP from at least one corresponding predictive frame of another layer of said at least two layers. The method also comprises: when it is detected that a frame of said layer is a key frame, re-encoding said key frame as a key frame for said video signal using intra-layer prediction without using inter-layer prediction; and when it is detected that a frame of said layer is a predictive frame, recuperating said predictive frame as a predictive frame for said video signal without re-encoding said predictive frame.

It will be appreciated by the skilled person that the same considerations and advantages as described above apply for this alternative aspect, *mutatis mutandis.* In particular, in this manner, the computational complexity of decoding and/or transcoding is further reduced, by allowing to recuperate at least some predictive frames without having to re-encode them again.

In an embodiment of the alternative aspect of the second aspect of the invention, the method also comprises: detecting whether the scale of said predictive frame and the scale of said obtained at least one SIP correspond; when it is detected that the scales do not correspond: scaling said obtained at least one SIP accordingly. Analogous considerations as above for the corresponding embodiment of the second aspect of the invention apply.

In an embodiment of the second aspect, which is also applicable to the alternative aspect of the second aspect of the invention, said transcoding of said scalable video signal to a video signal is performed in a software processing unit, preferably situated at or in an end-user device *(i.e.,* a client device at or of an end-user), and said resultant video signal is subsequently decoded for further output, preferably video screen output to a video screen of said end-user device, in a hardware processing unit at or in said end-user device, said hardware processing unit being configured for decoding a video signal to a format fit for video screen output, preferably a raw video stream.

In this manner, it is possible to decode a video signal *(i.e.,* a stream) using native HEVC hardware acceleration present in said end-user device in the form of said hardware processing unit, while maintaining the network flexibility due to the use of a scalable video signal.

In an embodiment of the second aspect, which may be combined with the previous embodiments, for transitioning from a current layer of said scalable video signal to a target layer of said scalable video signal, the method comprises the following steps: obtaining a current layer residual from a predictive frame of said current layer; obtaining a corresponding target layer residual from a predictive frame of said target layer; scaling said current layer residual to accord with the scale of said corresponding target layer residual; determining a difference between said scaled residual and said corresponding residual; scaling a current layer reference frame to accord with the scale of said corresponding target layer residual; and compensating said difference for said scaled current layer reference frame in order to estimate a target layer reference frame for decoding predictive frames of said target layer.

For providing fast transitions between layers for enhanced adaptivity, the lack of explicit dependencies between layers beyond key frames could be thought to reduce the speed of transition to the key frame frequency. In fact, when a transition needs to be done upwards or downwards, the at least one sharable information parameter is still common to all layers in SHVC_BL. What is missing is the exact reference frame for the target layer, which would have been constructed from the residuals of that layer.

Since the at least one sharable information parameter is common up to a scaling (where applicable), it is possible to use different estimators for creating a fast transition before the appearance of the next key frame.

A first estimator for the reference frame of the target layer is a simple scaling of the reconstructed frame from the originating layer.

A second estimator is based on the assumption that the difference between the reference frame of the target layer to be estimated and its prediction from the current decoded layer will be very close to the difference between the residuals of the corresponding frames in both layers. Therefore:

$$Estimated\_reference\_frame\_num\_i\_of\_target\_layer =$$

$$scaled(reference\_frame\_num\_i\_of\_current\_layer) -$$

$$(scaled(reference\_frame\_num\_i\_of\_current\_layer\_residual) -$$

$$reference\_frame\_num\_i\_of\_target\_layer\_residual)$$

Or with the target layer being L1 and coming from L2, and where E[.] stands for an estimator:

$$E[P_{L1}] = \text{scaled}(P_{L2}) - (\text{scaled}(P_{L2}{}^R) - P_{L1}{}^R)$$

This requires to both decode $P_{L2}{}^R$ and $P_{L1}{}^R$ but reduces the loss of information when predicting $P_{L1}$ by simply scaling $P_{L2}$. Drift can thus be limited but will in theory only be exactly canceled at the next key frame.

In an embodiment, which may be combined with the previous embodiments, all corresponding predictive frames of said at least two layers share a single exemplar of said or each at least one sharable information parameter.

In this manner, it is possible to further reduce the required size and thus the required transmission bitrate for the scalable video signal.

In an embodiment, which may be combined with the previous embodiments, at least one of said at least one sharable information parameter is provided in at least one of the following ways: contained by respective predictive frames of said base layer; contained by respective predictive frames of at least one of said at least one enhancement layer; and separately from respective predictive frames of said at least two layers.

In this context, 'provided' may be interpreted as 'packetized'.

In this manner, it is possible to attach the sharable information parameter(s) (such as motion information in the form of sets of motion vectors) to a preferred given layer. This further reduces any delay of transcoding that given layer, since its transcoding requires no scaling of the sharable information parameters to the scale of that given layer.

In an embodiment, which may be combined with the previous embodiments, said scalable video signal is encoded using a scalable extension to H.265/HEVC (High Efficiency Video Coding), and wherein said video signal is an H.265/HEVC video signal.

According to a further aspect of the invention, there is provided a method for transitioning from a current layer of a scalable video signal to a target layer of a scalable video signal, comprising the following steps: obtaining a current layer residual from a predictive frame of said current layer; obtaining a corresponding target layer residual from a predictive frame of said target layer; scaling said current layer residual to accord with the scale of said corresponding target layer residual; determining a difference between said scaled residual and said corresponding residual; scaling a current layer reference frame to accord with the scale of said corresponding target layer residual; and compensating said difference for said scaled current layer reference frame in order to estimate a target layer reference frame for decoding predictive frames of said target layer.

The skilled person will understand that the hereinabove described considerations and advantages also apply, *mutatis mutandis.*

According to a third aspect of the invention, there is provided an encoder-transcoder for at least one of encoding a video signal as a scalable video signal and transcoding a video signal to a scalable video signal, said scalable video signal having at least two layers representing different versions of said video signal, said at least two layers comprising a base layer and at least one enhancement layer. Said encoder-transcoder comprises a detector and at least one of: a sharable information module and an encoding module. The detector is configured for detecting whether a frame of said video signal is to be encoded predictively. The sharable information module is configured for determining at least one sharable information parameter relating to said frame based on at least a first version of said video signal and for providing said determined at least one sharable information parameter for at least one other version of said video signal. The encoding module configured for encoding said frame as a number of predictive frames for a corresponding number of said at least two layers using intra-layer prediction without using inter-layer prediction.

The skilled person will understand that the hereinabove described considerations and advantages also apply, *mutatis mutandis.* In particular, the encoder-transcoder may be configured to operate on and/or produce video signals that use the H.265/HEVC codec.

In an embodiment, said sharable information module is configured for respectively determining and providing at least one set of motion vectors.

In a further developed embodiment, which may optionally be combined with the previous embodiments, said at least one sharable information parameter comprises at least one of any one of the following: a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

According to a fourth aspect of the invention, there is provided a decoder-transcoder for at least one of decoding a scalable video signal and transcoding a scalable video signal to a video signal, said scalable video signal having at least two layers representing different versions of said video signal, said at least two layers comprising a base layer and at least one enhancement layer. Said decoder-transcoder comprises: a predictive frame detector and at least one of a decoding module, a sharable information module and a transcoding module. The predictive frame detector is configured for detecting for each frame of a number of frames of at least one of said at least two layers whether said frame is a predictive frame. The decoding module is configured for reconstructing said predictive frame using intra-layer prediction without using inter-layer prediction. The sharable information module is configured for: detecting whether said predictive frame contains at least one sharable information parameter, SIP, for reconstructing said predictive frame; and obtaining at least one SIP from at least one corresponding predictive frame of another layer of said at least two layers. The transcoding module is configured for: re-encoding said frame as a key frame for said video signal using intra-layer prediction without using inter-layer prediction; and recuperating said predictive frame as a predictive frame for said video signal without re-encoding said predictive frame.

The skilled person will understand that the hereinabove described considerations and advantages also apply, *mutatis mutandis.* In particular, the encoder-transcoder may be configured to operate on and/or produce video signals that use the H.265/HEVC codec.

In an embodiment, the sharable information module comprises: a scale detector configured for detecting whether the scale of said predictive frame and the scale of said obtained at least one SIP correspond; and a scaling unit configured for scaling said obtained at least one SIP according to said detecting by said scale detector.

In an embodiment, which may optionally be combined with the previous embodiment, said sharable information module is configured for respectively detecting and obtaining at least one set of motion vectors.

In another embodiment, which may optionally be combined with the previous embodiments, said decoder-transcoder further comprises the following for transitioning from a current layer of said scalable video signal to a target layer of said scalable video signal: an obtaining unit, a scaling unit, a differencing unit and a compensator. The obtaining unit is configured for obtaining a current layer residual from a predictive frame of said current layer and configured for obtaining a corresponding target layer residual from a predictive frame of said target layer. The scaling unit is configured for scaling said current layer residual to accord with the scale of said corresponding target layer residual and configured for scaling a current layer reference frame to accord with the scale of said corresponding target layer residual. The differencing unit is configured for determining a difference between said scaled residual and said corresponding residual. The compensator is configured for compensating said difference for said scaled current layer reference frame in order to estimate a target layer reference frame for decoding predictive frames of said target layer.

In the present specification, the notions 'encoding' and 'transcoding' are taken to mean the following respectively: 'encoding' is a process that takes as its input a raw video stream (raw formats are typically RGB or YUV) and outputs a video stream in a compressed format (e.g., H.264); 'transcoding' is a process that takes as its input a video stream in a compressed format and outputs a video stream in another compressed format or in the same compressed format but with different parameters. The inverse notion of 'encoding' applies for 'decoding'. The present specification regards 'video signals' and 'video streams' as equivalent terms.

Further, in the context of this specification, an encoder-transcoder can be an encoder or a transcoder, a decoder-transcoder can be a decoder or a transcoder. Where reference is made in this specification to features relating to one of the recited devices, a corresponding device may be used given the above cited considerations concerning the meaning of 'encoding', 'transcoding' and 'decoding', as will be appreciated by the skilled person.

In a further developed embodiment, which may optionally be combined with the previous embodiments, said at least one sharable information parameter comprises at least one of any one of the following: a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

According to a fifth aspect of the invention, there is provided a computer program product comprising computer-executable instructions for performing a method when the program is run on a computer, the method comprising the steps of any one of the methods of any one of the hereinabove described aspects and embodiments of methods according to the present invention. The skilled person will understand that the hereinabove described considerations and advantages also apply, *mutatis mutandis.*

According to a sixth aspect of the invention, there is provided a use of a scalable video signal having at least two layers representing different versions of a video signal. Said at least two layers comprise a base layer and at least one enhancement layer. Said base layer comprises: a number of base layer key frames; and a number of base layer predictive frames dependent on at least one frame of said base layer key frames and other predictive frames of said base layer predictive frames. Each enhancement layer of said at least one enhancement layer comprises: a number of enhancement layer key frames dependent on at least one corresponding key frame of said base layer key frames and key frames of other enhancement layers of said at least one enhancement layer; and a number of enhancement layer predictive frames dependent only on at least one frame of said enhancement layer key frames and other predictive frames of said enhancement layer predictive frames. Said scalable video signal comprises at least one sharable information parameter for at least one layer of said at least two layers. Said at least one sharable information parameter is determined based on at least one other layer of said at least two layers than said one layer.

The skilled person will understand that the hereinabove described considerations and advantages also apply, *mutatis mutandis.*

Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:

Figure 1 schematically illustrates a design diagram of an SHVC encoder;
Figure 2 schematically illustrates a design diagram of an SHVC decoder;
Figure 3 illustrates a set-up for transcoding between a scalable video signal and a video signal;
Figure 4 illustrates another set-up for transcoding between a scalable video signal and a video signal;
Figure 5A illustrates an example scalable video signal structure as encoded by an embodiment of an encoder or an embodiment of a method for encoding according to the prior art;
Figure 5B illustrates an example scalable video signal structure as encoded by an embodiment of an encoder or an embodiment of a method for encoding according to the present invention;
Figure 6 illustrates another example scalable video signal structure as encoded by an embodiment of an encoder or an embodiment of a method for encoding according to the present invention;
Figure 7 illustrates another example scalable video signal structure as encoded by an embodiment of an encoder or an embodiment of a method for encoding according to the present invention;
Figure 8A illustrates a decoding schedule of an example video signal as transcoded by an embodiment of a transcoder or an embodiment of a method for transcoding according to the prior art;
Figure 8B illustrates a decoding schedule of an example video signal as transcoded by an embodiment of a transcoder or an embodiment of a method for transcoding according to the present invention;
Figure 8C illustrates another decoding schedule of an example video signal as transcoded by an embodiment of a transcoder or an embodiment of a method for transcoding according to the present invention;
Figure 9 illustrates schematically an embodiment of a method for encoding and/or transcoding according to the present invention;
Figure 10 illustrates schematically an embodiment of a method for decoding and/or transcoding according to the present invention;
Figure 11 illustrates schematically an embodiment of an encoder-transcoder according to the present invention; and
Figure 12 illustrates schematically an embodiment of a decoder-transcoder according to the present invention.

Description of Embodiments

Although some of the exemplary embodiments described herein may use only one type of sharable information parameter, and more in particular, share motion information in the form of sets of motion vectors, it is to be understood that any type of sharable information parameter and any number of such types may be used by embodiments of the present invention. More in particular, the sharable information parameter may comprise any one or more of the following: a set of motion vectors, a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

The following technical reasons may explain the lack of success for H.264/SVC compared to H.264/AVC (Advanced Video Coding):

1. The bitrate penalty of 10% per scalable layer is considered as too important for the transport over the last mile.
2. The complexity of the design of the SVC decoder (single-loop coding) makes its hardware mapping difficult and economically not interesting (hence most decoders are implemented in software).
3. The important complexity of a SVC to AVC transcoding or rewriting (fast implementations report real-time transcoding for 720p video resolution at most).

The first two reasons highlight why few or no end-user devices today support H.264/SVC. The third reason explains why there is also no deployment of SVC in the network while offering transcoding of any of its layers towards H.264/AVC in real-time towards the end-user device, which would solve the issue of the last mile and the absence of an SVC decoder in the end-user device.

The H.265/HEVC (High Efficiency Video Coding) video compression standard shows an improvement of 50% in compression performance with respect to H.264/AVC but at the cost of a much larger computational complexity.

The design of its scalable extension SHVC has been guided in order to address some of these issues:

1. Firstly, it simplifies the hardware design by forcing multi-loop re-use per layer; in other words, SHVC consists of HEVC blocks (one per layer) that simply have an additional simple inter-layer prediction tool.

2. However, the bitrate penalty is now about 20% per scalable layer. The issue of the last mile bitrate penalty seems to be even worse today.

It is also difficult to estimate whether vendors will implement SHVC hardware decoders for end-user devices. It could also be that only a subset of the standard will be supported (e.g. only two layers in order to minimize computational complexity).

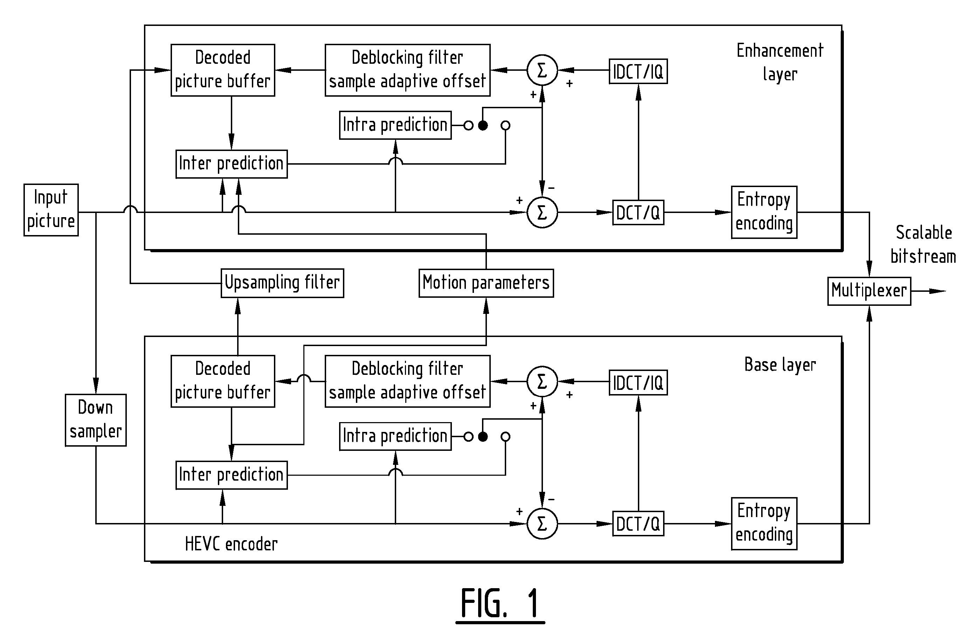

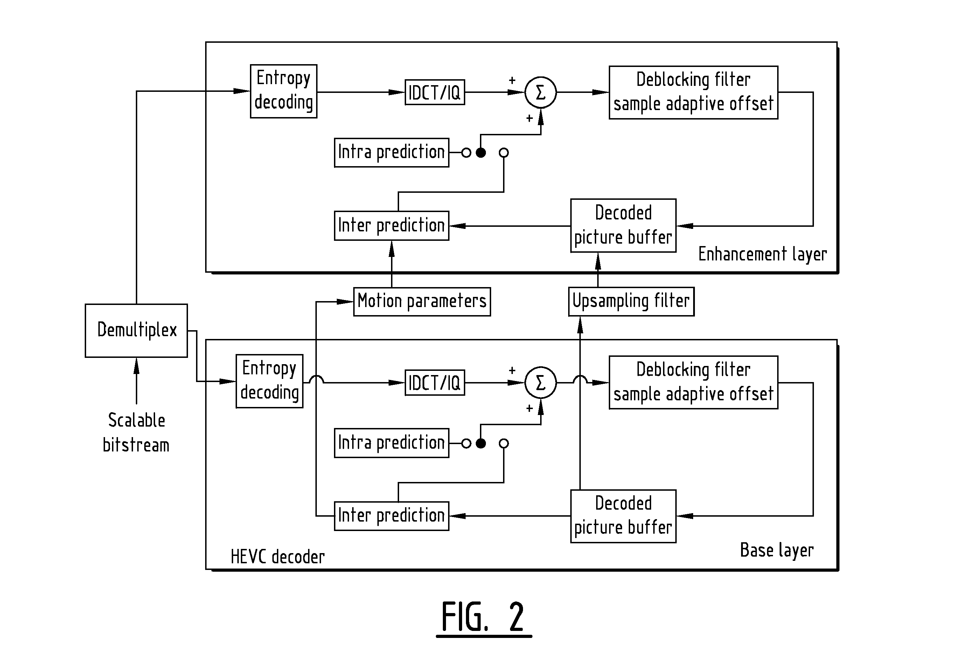

SHVC's design, as illustrated in figure 1 (encoder) and figure 2 (decoder) uses a multi-loop coding framework, such that in order to decode an enhancement layer, its reference layers have to first be fully decoded to make them available as prediction references. This differs from AVC's SVC extension design, which uses single-loop decoding for inter-coded macroblocks so that the motion compensation process only needs to be performed once when decoding. When two spatial or SNR layers are used, the base layer is the only reference layer, but for three or more spatial or SNR layers, intermediate layers may also be used as reference layers. To some extent, an efficient single-loop decoding was only possible by defining reference and enhancement layer decoding processes closely dependent at the block-level, e.g. adding new prediction modes, using reference layer contexts for the enhancement layer's entropy coding, etc. The high level design of the HEVC scalability extension, e.g., multi-loop coder/decoder and restrictions against block-level changes, were motivated by ease of implementation, especially the possibility to re-use existing HEVC implementations, even though the overall number of computations and memory accesses of the decoder would be higher than in a single-loop design. If SHVC would have been standardized in a single-loop strategy, the transcoding operation would have simply turned into a bitstream operation for quality layers as it was made for H.264/SVC. The fact that the choice has been made for multi-loop encoding and decoding forces the full decoding of the dependent layers prior to the encoding or decoding of a given frame of an enhancement layer. As a consequence, transcoding must be used in order to convert an enhancement layer into an independent HEVC video signal.

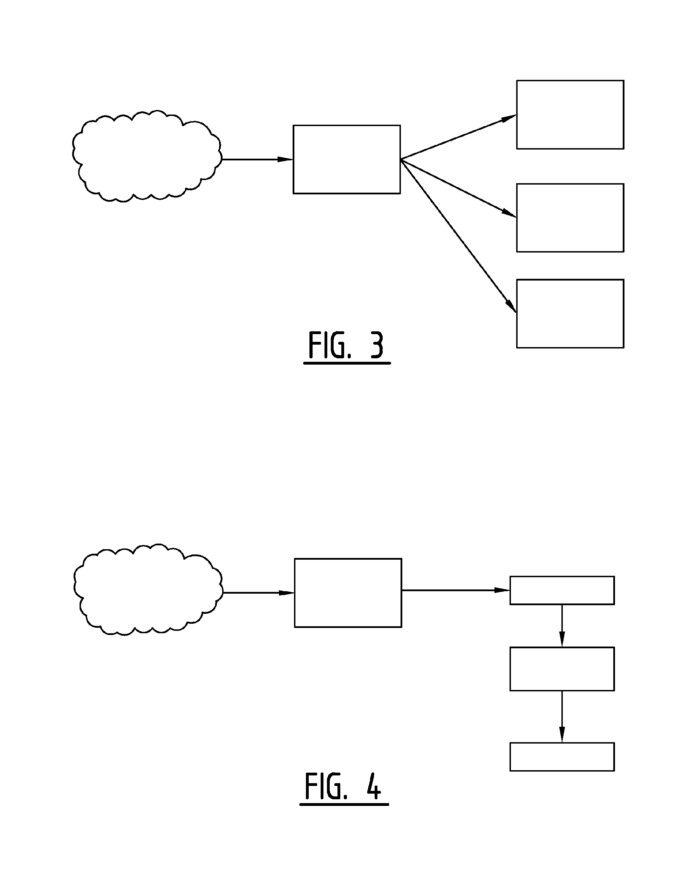

Figure 3 illustrates a set-up for transcoding between a scalable video signal and a video signal. In this set-up, an intermediate (*i.e.,* located between one or more end-user devices and a server) network element (such as a Multimedia Aware Network Element or MANE) may comprise a transcoder for transcoding a scalable video signal (*i.c.,* an SHVC_BL scalable video signal) to a regular video signal (*i.c.,* several variants of HEVC video signals). The transcoder in the intermediate network element may be implemented in hardware or software. The figure illustrates how multiple different devices may be serviced by the intermediate network element, using video signals adjusted to the preferences and/or capabilities of each device and its respective connection.

Figure 4 illustrates another set-up for transcoding between a scalable video signal and a video signal. In this set-up, an end-user device comprises a transcoder for transcoding a scalable video signal (*i.c.,* an SHVC_BL scalable video signal) to a regular video signal (*i.c.,* an HEVC video signal). The transcoder may be implemented in hardware or software. The resulting transcoded video signal (*i.c.,* an HEVC video signal) is subsequently further decoded for output (*e.g.,* as pixel output to a display) by an HEVC decoder, as typically present in modern end-user devices.

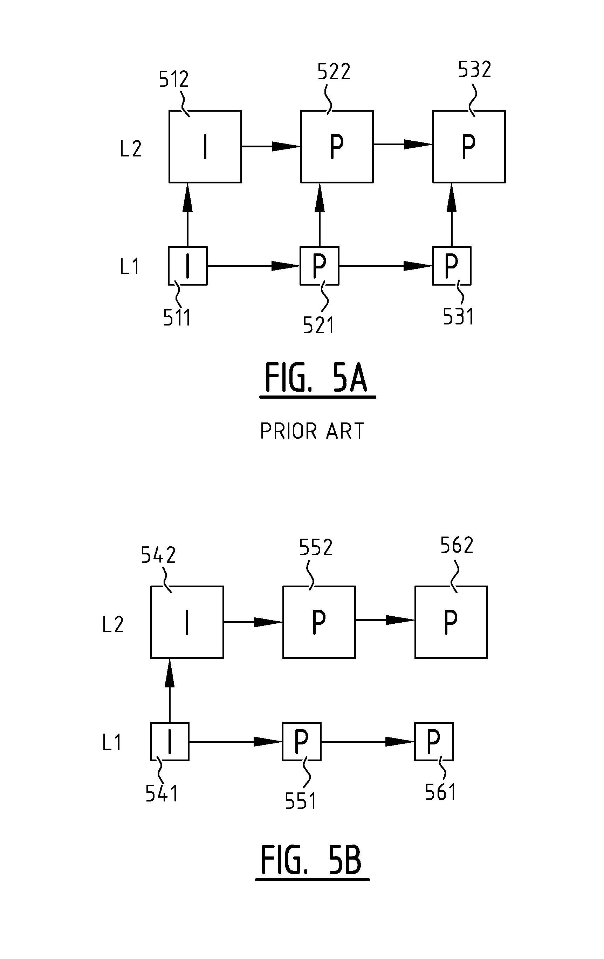

Figure 5A illustrates an example scalable video signal structure as encoded by an embodiment of an encoder or an embodiment of a method for encoding according to the prior art. Frames 511, 521 and 531 form a first layer L1, for instance the base layer. Frames 512, 522 and 532 form a second layer L2, for instance an enhancement layer, preferably a spatial enhancement layer. Dependencies in this and other figures are illustrated using full-line arrows. All predictive frames (521, 531, 522 and 532) are intra-layer dependent. In the example shown, the dependencies are singular, but it will be appreciated by the skilled person that multiple intra-layer dependencies may exist, in which case the predictive frames are more accurately termed 'B frames' for 'bi-directional predictive frames'. Further, the inter-layer dependencies between corresponding predictive frames of different layers (namely, the dependency of P frame 522 on P frame 521 and the dependency of P frame 532 on P frame 531) are clearly indicated.

Figure 5B illustrates an example scalable video signal structure as encoded by an embodiment of an encoder or an embodiment of a method for encoding according to the present invention. In particular, inter-layer prediction is only enabled at key frames, and for predictive frames, intra-layer prediction is used without using inter-layer prediction. This means that, while the intra-layer dependencies remain, as well as the inter-layer dependency for key frame 542 on key frame 541, it is clear to the skilled person that no inter-layer dependencies exist between the predictive frames of the first layer L1 (for instance, the base layer) and the second layer L2 (for instance, an enhancement layer, preferably a spatial enhancement layer). In other words, only intra-layer dependencies exist for the predictive frames of the shown layers.

Embodiments of the present invention are *inter alia* based on the inventive insight of constraining the GOP (Group of Pictures) structure in both enhancement and base layers so as to only enable inter-layer prediction on key frames as illustrated in figure 5B. Since predictive frames *(i.e.,* P (predictive) and B (bi-directional predictive) predictive frames) are very well compressed in HEVC and in SHVC, the main frames that need inter-layer prediction are the intra frames (I frames) or key frames. Choosing such a configuration enables to both reduce the complexity of the encoder and the complexity of the decoder for a moderate loss in compression performance.

Although the embodiment of the present invention as shown in figure 5B can sensibly be used on its own, in order to avoid the bitrate penalty that occurs when independently coding each layer for frames that are not key frames, it is advantageous to further constrain certain information as sharable information parameters to be shared among all layers. Embodiments of the present invention feature to this end the steps of determining at least one sharable information parameter based on at least a first version of the video signal, and providing said at least one sharable information parameter for at least one other version of said scalable video signal than said first version.

Further developed embodiments may implement this insight by representing P and B frames into a motion frame subpart and a residual frame subpart respectively. The motion subpart is only encoded once for all layers and can be scaled appropriately to each layer resolution. The residual subpart is on its turn encoded and represented specifically per layer.

Some advantages of embodiments of the present invention are to:

  1. Reduce the bitrate (motion vectors can represent up to 30% of an HEVC video signal) since motion information is only represented once.

  2. Maintain redundancy reduction between layers thanks to the common motion information, for instance estimated at the highest resolution where the precision is the best, hence maintaining quality while reducing the bitrate.

  3. Enable faster transcoding since no explicit dependencies are present between layers (except for key frames), no residual of frames from a different layer than the one to be transcoded need to be decoded.

  4. Enable to further reduce the delay of transcoding a given layer by attaching the motion information to this layer. Its transcoding then involves no scaling of motion information to its resolution.

Embodiments of the present invention may use SHVC tools, but in a different way, with the objective of performing layer transcoding with less delay and less computational complexity. Similarly to SHVC, SHVC_BL also may use a layering approach with multiple layers, namely a base layer and one or more enhancement layers.

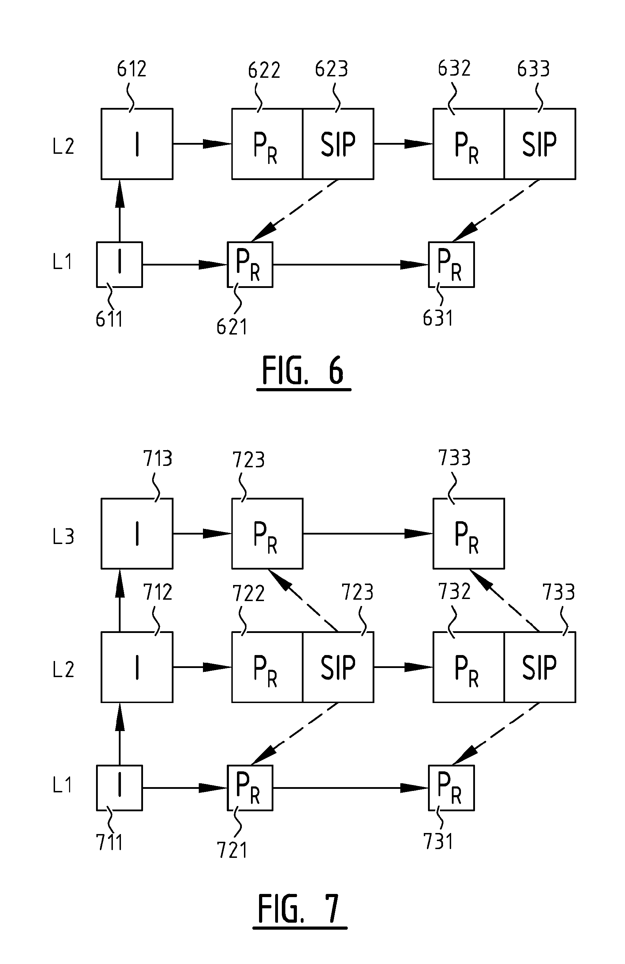

Figure 6 illustrates another example scalable video signal structure as encoded by an embodiment of an encoder or an embodiment of a method for encoding according to the present invention. Some P frames (622/623 and 632/633) in this example contain both sharable information parameters, such as motion vector information, SIP, and residual information $P_R$. Other predictive frames (621 and 631) in this example comprise only residual information. Nevertheless, the skilled person will appreciate that other configurations are possible: in general sharable information parameters may additionally or alternatively also be provided for one or more other layers. The dashed arrows indicate that a sharable information parameter of a layer (here sharable information parameters 623 and 633 of the second layer L2, for instance an enhancement layer, preferably a spatial enhancement layer) may be adapted for use with another layer (here the predictive frames 621 and 631 of the first layer L1, for instance the base layer). Further, it will be understood that the sharable information parameters 623 and 633 may require downscaling (spatial) and/or downsampling (temporal) for use with the predictive frames 621 and 631.

Figure 7 illustrates another example scalable video signal structure as encoded by an embodiment of an encoder or an embodiment of a method for encoding according to the present invention. Three layers L1-L3 are shown; L1 is a first layer, for instance the base layer, L2 is a second layer, for instance a (preferably spatial) enhancement layer and L3 is a third layer, for instance a quality (also called SNR) enhancement layer. Some P frames (722/723 and 732/733) in this example contain both sharable information parameters, such as motion vector information, SIP, and residual information $P_R$. Other predictive frames (721, 731, 723 and 733) in this example comprise only residual information. Nevertheless, the skilled person will appreciate that other configurations are possible: in general sharable information parameters may additionally or alternatively also be provided for one or more other layers. The configuration has been chosen such that decoding and/or transcoding of the second layer L2 is computationally less complex, since the sharable information parameters (where applicable, such as for motion vectors) must not be scaled to accord with the scale of the second layer L2. The dashed arrows indicate that a sharable information parameter of a layer (here sharable information parameters 723 and 733 of the second layer L2) may be adapted for use with another layer (here the predictive frames 721 and 731 of the first layer L1 and/or the predictive frames 723 and 733 of the third layer L3). Further, it will be understood that the sharable information parameters 723 and 733 may require downscaling (spatial) and/or downsampling (temporal) for use with the predictive frames 721, 731, 723 and 733.

In general, the transport of the SHVC_BL scalable video signal is similar to the transport of an SHVC scalable video signal. A difference is that access units related to P or B frames may contain only residual signal information (more in particular, the quantized transform coefficients that represent the residual signal), since sharable information parameters (including one or more of such parameters as a set of motion vectors, a coding unit, an inter prediction unit, an intra prediction unit, a transform unit, a quantization parameter, an in-loop filter parameter, a deblocking filter parameter, a sample-adaptive offset parameter, and an adaptive loop filtering parameter) may be packetized elsewhere.

Several approaches exist. If the goal is backwards compatibility, then the base layer should contain the motion information in an SHVC compliant manner. It follows that in this case, although the motion vectors might be scaled and represented for a given enhancement layer, they will be packetized along with the base layer.

Another option is to favor a given enhancement layer in such a way that its decoding and transcoding are optimal. For example, for a 3-layer SHVC_BL video signal, in case a spatial enhancement layer contains the motion information, its transcoding and decoding will exhibit the lowest delay.

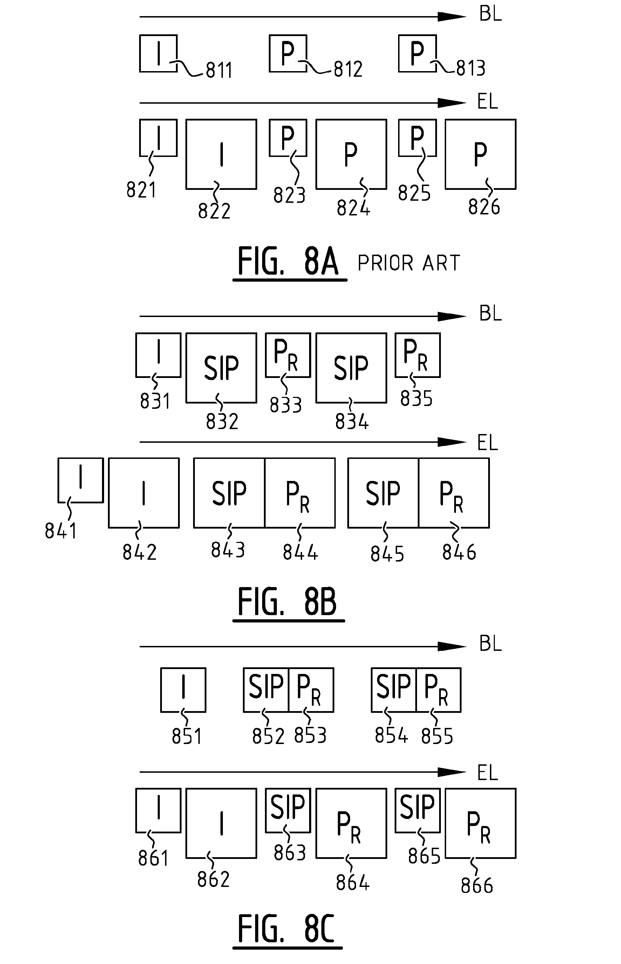

Figure 8A illustrates a decoding schedule of an example video signal as transcoded by an embodiment of a transcoder or an embodiment of a method for transcoding according to the prior art.

For decoding the base layer, frames 811-813 must be obtained and reconstructed, as is well-known to the skilled person.

For decoding the enhancement layer, it is necessary to obtain not only frames 822, 824 and 826 belonging to said enhancement layer, but also frames 821, 823 and 825 belonging to the base layer, since all frames (key frames and predictive frames) of the enhancement layer depend on frames of the base layer. Similar dependency relationships exist for decoding other enhancement layers.

Some embodiments of the present invention may comprise a non-backwards compatible base layer, in the sense that, as opposed to SHVC, the base layer does not contain all necessary information for playback. More in particular, some embodiments may packetize sharable information parameters (such as motion vectors) with another layer or with other layers than the base layer, which requires a transcoding operation for the base layer. This modification, at the cost of the base layer, offers the opportunity to speed up the extraction of all other enhancement layers. Figure 8B illustrates a decoding schedule of an example video signal as transcoded by an embodiment of a transcoder or an embodiment of a method for transcoding according to the present invention.

For decoding the base layer, it is necessary to obtain the frames 831, 833 and 835 belonging to the base layer, where it is noted that, in this example, frames 833 and 835 - both predictive frames-comprise only residual information (hence the indication $P_R$), as well as to obtain the sharable information parameters 832 and 834, typically from predictive frames of an enhancement layer, preferably a spatial enhancement layer, more preferably the highest-resolution spatial enhancement layer, and to downscale (in this case, or upscale in other cases) the sharable information parameters where applicable (for instance, it is necessary to downscale motion vectors if such are comprised in the sharable information parameters).

For decoding the enhancement layer, it is necessary to obtain the frames 841-846, since key frame 842 of the enhancement layer depends on key frame 841 of the base layer. Sharable information parameters 843 and 845 are in this example shown comprised in the corresponding predictive frames, along with the respective residuals 844 and 846.

It is clear to the skilled person that there is less computational complexity involved in decoding the enhancement layer, for a small cost of potentially requiring scaling (downscaling or upscaling) when decoding the base layer, as compared to the prior art approach illustrated in figure 8A. Moreover, it will be appreciated that the sharable information parameters 832 and 834, which have in this example been determined based on a higher-resolution (and hence higher-scale) version of the video signal, may provide better accuracy for decoding the base layer than if they would have been determined based on the base layer itself.

In other words, while there may be a slightly higher decoding or extraction cost for the base layer in SHVC_BL (due to having to find motion vectors in an enhancement layer and downscale them) compared to SHVC, the gain for the enhancement layer is obvious: no P or B frames of the base layer need to be decoded. It follows that transcoding for a given SHVC_BL layer to HEVC can be done with a smaller computational complexity than for SHVC, hence enabling a more scalable solution for the HEVC decoders deployed in the market.

Other advantages of embodiments of the present invention are:

- Faster encoding (motion vectors are estimated only once for the spatial enhancement layer, this corresponds to up to 30% of an encoder computational cost).
- Faster HEVC to SHVC_BL transcoding (if we take the HEVC video signal as the spatial enhancement layer).
- Potentially reduced bandwidth with maintained quality (in case the motion vectors scale well, this is usually the case but is content-dependent).
- The client device could signal its quality preference for the available bandwidth. In case of bandwidth variation, the latter easily allows to switch to a lower or higher quality. In other words, the end-user device benefits from the properties of a scalable codec such as SHVC without having to download and decode it.

Some embodiments of the present invention may comprise a backwards compatible base layer, in the sense that the base layer essentially corresponds to an SHVC base layer, by including all necessary information in the base layer. In other words, the base layer of said embodiments can be decoded as if it were a regular SHVC base layer - it is SHVC compliant. Figure 8C illustrates another decoding schedule of an example video signal as transcoded by an embodiment of a transcoder or an embodiment of a method for transcoding according to the present invention.

For decoding the base layer, it is necessary to obtain the frames 851-855. As can be seen, the sharable information parameters 852 and 854 are already of an according scale with the frames of the base layer, such that decoding the base layer (for output or for further transcoding) requires little of no overhead as compared to the prior art approach illustrated in figure 8A.

For decoding the enhancement layer, it is necessary to obtain not only the enhancement layer frames 862, 864 and 866, but also the base layer key frame 861 (since the enhancement layer key frame 862 depends on that) and the sharable information parameters 863 and 865. In this example, it can be seen that the sharable information parameters must (where applicable) be upscaled to accord with the scale of the corresponding enhancement layer frames.

It is clear to the skilled person that it is possible to configure the video signal structure such that the base layer is backward compatible.

Some embodiments of the present invention may feature a hybrid approach, wherein the sharable information parameters are packetized with the base layer, but (where applicable) are of different scale due to having been determined based on a different-scale layer than the base layer.

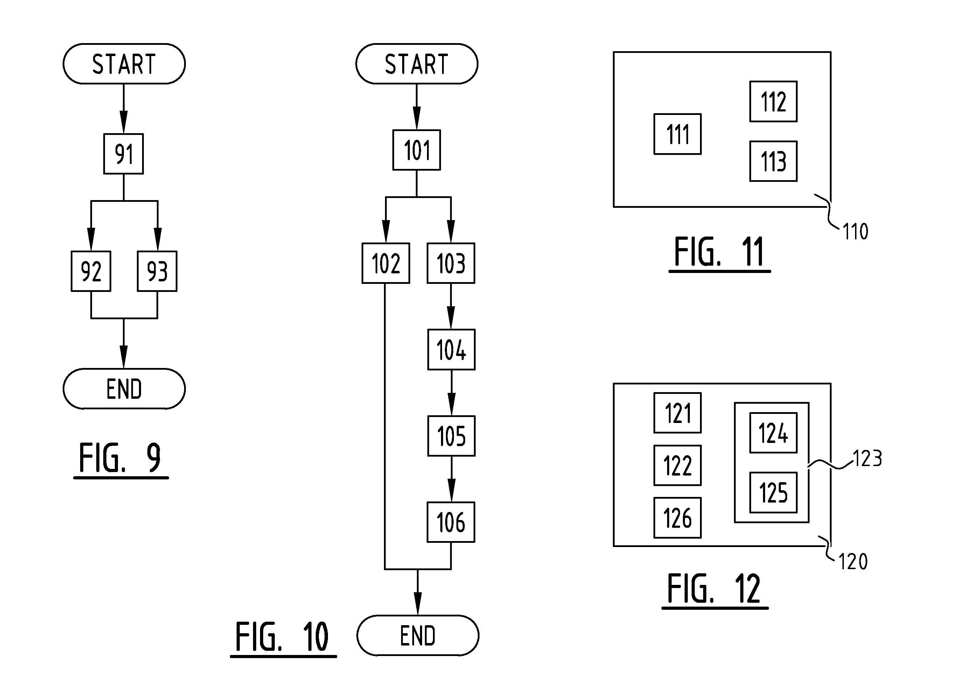

Figure 9 illustrates schematically an embodiment of a method for encoding and/or transcoding according to the present invention. The method comprises detecting whether a frame of said video signal is to be encoded predictively 91. When it is detected that said frame is to be encoded predictively, the method comprises performing at least one of the sets of steps 92 and 93. Step 92 comprises determining at least one sharable information parameter relating to said frame based on at least a first version of said video signal and providing said determined at least one sharable information parameter for at least one other version of said video signal. Step 93 comprises encoding said frame as a number of predictive frames for a corresponding number of said at least two layers using intra-layer prediction without using inter-layer prediction.

Figure 10 illustrates schematically an embodiment of a method for decoding and/or transcoding according to the present invention. The method comprises detecting for each frame of a number of frames of at least one of said at least two layers whether said frame is a predictive frame 101.

When it is detected that said frame is a predictive frame, the method comprises performing at least one of the sets of steps 102 and 103-106. Step 102 comprises reconstructing said predictive frame using intra-layer prediction without using inter-layer prediction. Step 103 comprises detecting whether said predictive frame contains at least one sharable information parameter, SIP, for reconstructing said predictive frame. When it is detected that said predictive frame contains no SIP,

step 104 is performed, step 104 comprising obtaining at least one SIP from at least one corresponding predictive frame of another layer of said at least two layers. Optionally, in some embodiments, steps 105-106 are also performed, step 105 comprising detecting whether the scale of said predictive frame and the scale of said obtained at least one SIP correspond. When it is detected that the scales do not correspond: the method comprises scaling said obtained at least one SIP accordingly 106.

Figure 11 illustrates schematically an embodiment of an encoder-transcoder 110 according to the present invention. The encoder-transcoder 110 comprises a detector 111 and at least one of a sharable information module 112 and an encoding module 113. The detector 111 is configured for detecting whether a frame of said video signal is to be encoded predictively. The sharable information module 112 is configured for determining at least one sharable information parameter relating to said frame based on at least a first version of said video signal. The sharable information module 112 is also configured for providing said determined at least one sharable information parameter for at least one other version of said video signal. The encoding module 113 is configured for encoding said frame as a number of predictive frames for a corresponding number of said at least two layers using intra-layer prediction without using inter-layer prediction.

Figure 12 illustrates schematically an embodiment of a decoder-transcoder 120 according to the present invention. The decoder-transcoder 120 comprises a predictive frame detector 121 and at least one of a decoding module 122, a sharable information module 123 and a transcoding module 126. The predictive frame detector 121 configured for detecting for each frame of a number of frames of at least one of said at least two layers whether said frame is a predictive frame. The decoding module 122 is configured for reconstructing said predictive frame using intra-layer prediction without using inter-layer prediction. The sharable information module 123 is configured for detecting whether said predictive frame contains at least one sharable information parameter, SIP, for reconstructing said predictive frame. The sharable information module 123 is also configured for obtaining at least one SIP from at least one corresponding predictive frame of another layer of said at least two layers. The sharable information module 123 optionally also comprises a scale detector 124 and a scaling unit 125. The scale detector 124 is configured for detecting whether the scale of said predictive frame and the scale of said obtained at least one SIP correspond. The scaling unit 125 is configured for scaling said obtained at least one SIP according to said detecting by said scale detector 124. The transcoding module 126 is configured for re-encoding said frame as a key frame for said video signal using intra-layer prediction without using inter-layer prediction. The transcoding module 126 is also configured for recuperating said predictive frame as a predictive frame for said video signal without re-encoding said predictive frame.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

**Claims**

1. A method for at least one of encoding a video signal as a scalable video signal and transcoding a video signal to a scalable video signal, said scalable video signal having at least two layers representing different versions of said video signal, said at least two layers comprising a base layer and at least one enhancement layer, said method comprising:

   - detecting whether a frame of said video signal is to be encoded predictively; and
   - when it is detected that said frame is to be encoded predictively, performing at least one of the following sets of steps:

      - determining at least one sharable information parameter relating to said frame based on at least a first version of said video signal; and providing said determined at least one sharable information parameter for at least one other version of said video signal; and
      - encoding said frame as a number of predictive frames for a corresponding number of said at least two layers using intra-layer prediction without using inter-layer prediction.

2. The method of claim 1, comprising the following steps:

   - when it is detected that said frame of said video signal is to be encoded as a predictive frame, determining at least one sharable information parameter relating to said frame based on at least a first version of said video signal; and providing said determined at least one sharable information parameter for at least one other version of said video signal; wherein said at least one sharable information parameter comprises at least one set of motion vectors and optionally comprises at least one of any one of the following:

a coding unit, an inter prediction unit, an intra prediction unit, a transform unit, a quantization parameter, an in-loop filter parameter, a deblocking filter parameter, a sample-adaptive offset parameter, and an adaptive loop filtering parameter; and

- when it is detected that said frame is to be encoded predictively, encoding said frame as a number of predictive frames for a corresponding number of said at least two layers using intra-layer prediction without using inter-layer prediction.

3. The method of any one of the previous claims, wherein said first version of said video signal is a spatial enhancement layer of said at least one enhancement layer.

4. A method for at least one of decoding a scalable video signal and transcoding a scalable video signal to a video signal, said scalable video signal having at least two layers representing different versions of said video signal, said at least two layers comprising a base layer and at least one enhancement layer, said method comprising:

- detecting for each frame of a number of frames of at least one of said at least two layers whether said frame is a predictive frame; and
- when it is detected that said frame is a predictive frame, performing at least one of the following sets of steps:

- reconstructing said predictive frame using intra-layer prediction without using inter-layer prediction; and
- detecting whether said predictive frame contains at least one sharable information parameter, SIP, for reconstructing said predictive frame and when it is detected that said predictive frame contains no SIP:

- obtaining at least one SIP from at least one corresponding predictive frame of another layer of said at least two layers.

5. The method of claim 4, comprising the following steps after obtaining at least one SIP:

- detecting whether the scale of said predictive frame and the scale of said obtained at least one SIP correspond; and
- when it is detected that the scales do not correspond: scaling said obtained at least one SIP accordingly; and/or wherein said at least one sharable information parameter comprises at least one set of motion vectors and optionally comprises at least one of any one of the following:

a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

6. The method of claim 4 or claim 5, for transcoding a layer of said at least two layers of said scalable video signal to a video signal, comprising:

- when it is detected that a frame of said layer is a key frame, re-encoding said key frame as a key frame for said video signal using intra-layer prediction without using inter-layer prediction;
- when it is detected that a frame of said layer is a predictive frame, recuperating said predictive frame as a predictive frame for said video signal without re-encoding said predictive frame.

7. The method of any one of the claims 4-6, for transitioning from a current layer of said scalable video signal to a target layer of said scalable video signal comprising the following steps:

- obtaining a current layer residual from a predictive frame of said current layer;
- obtaining a corresponding target layer residual from a predictive frame of said target layer;
- scaling said current layer residual to accord with the scale of said corresponding target layer residual;
- determining a difference between said scaled residual and said corresponding residual;
- scaling a current layer reference frame to accord with the scale of said corresponding target layer residual; and
- compensating said difference for said scaled current layer reference frame in order to estimate a target layer reference frame for decoding predictive frames of said target layer.

8. The method of any one of the previous claims, wherein all corresponding predictive frames of said at least two layers share a single exemplar of said or each at least one sharable information parameter.

9. The method of any one of the previous claims, wherein at least one of said at least one sharable information parameter is provided in at least one of the following ways:

- contained by respective predictive frames of said base layer;
- contained by respective predictive frames of at least one of said at least one enhancement layer; and
- separately from respective predictive frames of said at least two layers.

10. The method of any one of the previous claims, wherein said scalable video signal is encoded using a scalable extension to H.265/HEVC (High Efficiency Video Coding), and wherein said video signal is an H.265/HEVC video signal.

11. An encoder-transcoder for at least one of encoding a video signal as a scalable video signal and transcoding a video signal to a scalable video signal, said scalable video signal having at least two layers representing different versions of said video signal, said at least two layers comprising a base layer and at least one enhancement layer, said encoder-transcoder comprising:

- a detector configured for detecting whether a frame of said video signal is to be encoded predictively; and at least one of the following:
- a sharable information module configured for determining at least one sharable information parameter relating to said frame based on at least a first version of said video signal; and configured for providing said determined at least one sharable information parameter for at least one other version of said video signal; and
- an encoding module configured for encoding said frame as a number of predictive frames for a corresponding number of said at least two layers using intra-layer prediction without using inter-layer prediction.

12. The encoder-transcoder of claim 11, wherein said sharable information module is configured for respectively determining and providing at least one set of motion vectors and optionally at least one of any one of the following: a coding unit, an inter prediction unit, an intra prediction unit, a transform unit, a quantization parameter, an in-loop filter parameter, a deblocking filter parameter, a sample-adaptive offset parameter, and an adaptive loop filtering parameter.

13. A decoder-transcoder for at least one of decoding a scalable video signal and transcoding a scalable video signal to a video signal, said scalable video signal having at least two layers representing different versions of said video signal, said at least two layers comprising a base layer and at least one enhancement layer, said decoder-transcoder comprising:

- a predictive frame detector configured for detecting for each frame of a number of frames of at least one of said at least two layers whether said frame is a predictive frame; and at least one of the following:
- a decoding module configured for reconstructing said predictive frame using intra-layer prediction without using inter-layer prediction; and
- a sharable information module configured for:

- detecting whether said predictive frame contains at least one sharable information parameter, SIP, for reconstructing said predictive frame; and
- obtaining at least one SIP from at least one corresponding predictive frame of another layer of said at least two layers; and

- a transcoding module configured for:

- re-encoding said frame as a key frame for said video signal using intra-layer prediction without using inter-layer prediction; and
- recuperating said predictive frame as a predictive frame for said video signal without re-encoding said predictive frame.

14. The decoder-transcoder of claim 13, said sharable information module comprises:

- a scale detector configured for detecting whether the scale of said predictive frame and the scale of said obtained at least one SIP correspond; and

- a scaling unit configured for scaling said obtained at least one SIP according to said detecting by said scale detector; and/or

wherein said sharable information module is configured for respectively detecting and obtaining at least one set of motion vectors and optionally at least one of any one of the following: a coding unit, an inter prediction unit, an intra prediction unit, a transform unit, a quantization parameter, an in-loop filter parameter, a deblocking filter parameter, a sample-adaptive offset parameter, and an adaptive loop filtering parameter; and/or

said decoder-transcoder comprising the following for transitioning from a current layer of said scalable video signal to a target layer of said scalable video signal:

- an obtaining unit configured for obtaining a current layer residual from a predictive frame of said current layer and configured for obtaining a corresponding target layer residual from a predictive frame of said target layer;

- a scaling unit configured for scaling said current layer residual to accord with the scale of said corresponding target layer residual and configured for scaling a current layer reference frame to accord with the scale of said corresponding target layer residual;

- a differencing unit configured for determining a difference between said scaled residual and said corresponding residual; and

- a compensator configured for compensating said difference for said scaled current layer reference frame in order to estimate a target layer reference frame for decoding predictive frames of said target layer.

**15.** A computer program product comprising computer-executable instructions for performing a method when the program is run on a computer, the method comprising the steps of any one of the methods of any one of the claims 1-10.

FIG. 1

EP 2 986 001 A1

FIG. 2

FIG. 3

FIG. 4

512
522
532

L2

I | P | P

L1

I | P | P

511
521
531

## FIG. 5A

PRIOR ART

542
552
562

L2

I | P | P

L1

I | P | P

541
551
561

## FIG. 5B

FIG. 6

FIG. 7

EP 2 986 001 A1

BL

| I | 811 |     | P | 812 |     | P | 813 |

EL

| I | 821 | I | 822 | P | 823 | P | 824 | P | 825 | P | 826 |

**FIG. 8A**  PRIOR ART

BL

| I | 831 | SIP | 832 | P_R | 833 | SIP | 834 | P_R | 835 |

EL

| I | 841 | I | 842 | SIP | 843 | P_R | 844 | SIP | 845 | P_R | 846 |

**FIG. 8B**

BL

| I | 851 | SIP | 852 | P_R | 853 | SIP | 854 | P_R | 855 |

EL

| I | 861 | I | 862 | SIP | 863 | P_R | 864 | SIP | 865 | P_R | 866 |

**FIG. 8C**

22

START

91

92    93

END

FIG. 9

START

101

102    103

104

105

106

END

FIG. 10

111

112

113

110

FIG. 11

121

122

126

124

125

123

120

FIG. 12

23

EP 2 986 001 A1

Europäisches
Patentamt

European
Patent Office

Office européen
des brevets

**EUROPEAN SEARCH REPORT**

Application Number

EP 14 30 6278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/127692 A1 (ERICSSON TELEFON AB L M [SE]; RUSERT THOMAS [DE]; ANDERSSON KENNETH [S) 11 November 2010 (2010-11-11) | 1-9, 11-15 | INV. H04N19/52 H04N19/463 |
| A | * the whole document * & JP 2012 526426 A 25 October 2012 (2012-10-25) * the whole document * | 10 | H04N19/33 H04N19/59 |
| | ----- | | |
| X | JIANLE CHEN ET AL: "Scalable Video Coding Extension for HEVC", DATA COMPRESSION CONFERENCE (DCC), 2013, IEEE, 20 March 2013 (2013-03-20), pages 191-200, XP032429411, DOI: 10.1109/DCC.2013.27 ISBN: 978-1-4673-6037-1 | 1,4,10, 11,13,15 | |
| A | * the whole document * | 2,3,5-9, 12,14 | |
| | ----- | | |
| X | GISQUET C ET AL: "Combination of several interlayer tools", 103. MPEG MEETING; 21-1-2013 - 25-1-2013; GENEVA; (MOTION PICTURE EXPERT GROUP OR ISO/IEC JTC1/SC29/WG11), no. m27436, 17 January 2013 (2013-01-17), XP030056006, | 1,4,11, 13,15 | TECHNICAL FIELDS SEARCHED (IPC) H04N |
| A | * the whole document * | 2,3, 5-10,12, 14 | |
| | ----- -/-- | | |

The present search report has been drawn up for all claims

| Place of search | Date of completion of the search | Examiner |
|---|---|---|
| Munich | 1 December 2014 | Cyranka, Oliver |

EPO FORM 1503 03.82 (P04C01)

Europäisches
Patentamt
European
Patent Office
Office européen
des brevets

# EUROPEAN SEARCH REPORT

Application Number

EP 14 30 6278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI Z G ET AL: "SVC encoder optimization", 24. JVT MEETING; 81. MPEG MEETING; 29.6.2007 - 5.7.2006; GENEVA, CH;(JOINT VIDEO TEAM OF ISO/IEC JTC1/SC29/WG11 AND ITU-T SG.16 ), no. JVT-X022, 25 June 2007 (2007-06-25), XP030007130, ISSN: 0000-0088 | 1,4,11, 13,15 | |
| A | * the whole document * | 2,3, 5-10,12, 14 | |
| A | SCHWARZ H ET AL: "SVC overview", 21. JVT MEETING; 78. MPEG MEETING; 20-10-2006 - 27-10-2006; HANGZHOU,CN; (JOINT VIDEO TEAM OF ISO/IEC JTC1/SC29/WG11 AND ITU-T SG.16 ),, no. JVT-U145, 20 October 2006 (2006-10-20) , XP030006791, ISSN: 0000-0405 * the whole document * | 1-15 | |
| A | Ruoyang Yu: "Master's Thesis Next-Generation Scalable Video Coding", 1 May 2012 (2012-05-01), XP055092566, Retrieved from the Internet: URL:http://www.eit.lth.se/sprapport.php?uid=636 [retrieved on 2013-12-10] * the whole document * | 1-15 | |

TECHNICAL FIELDS SEARCHED (IPC)

-/--

The present search report has been drawn up for all claims

| Place of search | Date of completion of the search | Examiner |
|---|---|---|
| Munich | 1 December 2014 | Cyranka, Oliver |

**Europäisches Patentamt**
**European Patent Office**
**Office européen des brevets**

# EUROPEAN SEARCH REPORT

Application Number

EP 14 30 6278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GARY J. SULLIVAN ET AL: "Standardized Extensions of High Efficiency Video Coding (HEVC)", IEEE JOURNAL OF SELECTED TOPICS IN SIGNAL PROCESSING, vol. 7, no. 6, 1 December 2013 (2013-12-01), pages 1001-1016, XP055142633, ISSN: 1932-4553, DOI: 10.1109/JSTSP.2013.2283657 * the whole document * | 1-15 | |

-----

TECHNICAL FIELDS
SEARCHED     (IPC)

The present search report has been drawn up for all claims

| Place of search | Date of completion of the search | Examiner |
|---|---|---|
| Munich | 1 December 2014 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 986 001 A1**

## ANNEX TO THE EUROPEAN SEARCH REPORT
## ON EUROPEAN PATENT APPLICATION NO.

EP 14 30 6278

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2014

| Patent document cited in search report | Publication date | Patent family member(s) | Publication date |
|---|---|---|---|
| WO 2010127692 A1 | 11-11-2010 | EP 2428042 A1<br>JP 5504336 B2<br>JP 2012526426 A<br>US 2012183065 A1<br>WO 2010127692 A1 | 14-03-2012<br>28-05-2014<br>25-10-2012<br>19-07-2012<br>11-11-2010 |

EPO FORM P0459

For more details about this annex : see Official Journal of the European Patent Office, No. 12/82